# EUROPEAN PATENT APPLICATION

(11) **EP 1 473 929 A2**
(43) Date of publication of application: **03.11.2004**
(21) Application number: 04101442.4
(22) Date of filing: 07.04.2004
(51) Int. Cl.: H04N 5/225

(54) **Pivot device for image photographing apparatus**

(30) Priority: 02.05.2003 KR 2003028324
(71) Applicant: Samsung Electronics Co., Ltd., Suwon-si, Gyeonggi-do 442-742 (KR)
(72) Inventor: Kim, Nam-il 323-1207, Hansol Apartment, Suwon-si Gyeonggi-do (KR)
(74) Representative: Read, Matthew Charles

(57) **Abstract**

A hinge apparatus for an image photographing apparatus wherein the hinge apparatus rotatably connects a housing with respect to a main body so that the housing can rotate in a predetermined rotation range. The hinge apparatus includes a fixing bracket secured to the main body, a hinge unit secured to the housing and connected to the fixing bracket to be reciprocatingly rotatable within a predetermined angle, a shaft member for rotatably connecting the hinge unit and the fixing bracket so that the hinge unit and the fixing bracket can be rotated with respect to each other, and a sensing unit disposed on the hinge unit and/or the fixing bracket to sense the relative rotational range of the hinge unit with respect to the fixing bracket.

## Description

The present invention relates to a pivot device comprising first and second members mounted on a common shaft for relative rotary motion.

Digital still cameras (DSC) convert images, captured through a lens, into digital signals which stored in a memory device such as a hard disc or a memory card. The stored images can often be output directly to an external device, such as a computer, without having to use an intermediate device such as a scanner.

DSCs are highly compatible with personal computers, enabling easy editing and correcting of the captured images. With almost the same structure as film cameras, DSCs are also easy to carry.

DSCs are primarily comprised of a lens device, a memory device, a signal modulating device and a display device. However, due to the limited capacity of the recording media used, DSCs is mostly used to photograph still images. While in theory a DSC is able to capture moving images for a limited time, in practice it is almost impossible to do so for a long period of time. In addition, as current DSCs are unable to record and reproduce sound, they are usually not used to take, record or reproduce moving pictures. Alternatively, a recording/reproducing apparatus such as a camcorder can be used to record and reproduce audio information as well as images of the object. Currently available camcorders typically use electromagnetic tape as a recording medium.

Camcordera includes a lens device, a signal converting device, a deck device for recording/reproducing captured images and a display device. Camcorders usually use cassette tapes as the recording medium. The tapes are loaded into the deck device for recording captured moving pictures on the cassette tape. Additionally, camcorder are provided with microphones and speakers and are able to capture moving pictures on the cassette tape mounted thereon for almost an hour.

Camcorders can also photograph still images, but due to somewhat poor image quality compared to DSCs, camcorders are usually used for moving pictures only. Additionally, camcorders are more complex, larger and expensive devices than DSCs.

As described above, in order to record and reproduce image and sound, consumers need to keep both a DSC and camcorder, which can be expensive. Furthermore, in order to record and reproduce image and sound, consumers need to carry both the DSC and the camcorder, which can be awkward and physcially tiring.

A pivot device according to the present invention is characterised by position sensing means for generating an electrical signal indicating the relative positions of said members.

The position sensing means may comprise a cam surface, projecting towards the first member from the second member, and switch means operated by first and second cam follower means, carried by the first member and arranged for be selectively displaced by the cam surface according to the relative angular positions of the first and second members. Preferably, the cam follower means are located at the same radius with respect to the axis of rotation of the pivot device and are angularly separated by an angular distance greater that the angular extent of the cam surface at said radius.

One of said members may have a radial projection and the other an axial projection, said projections being configured to contact each other so as to set the limits of the achievable range of relative angular positions of said members.

The device may include a signal line passing from through the pivot device with an intermediate portion of the signal line coiled about the shaft in a space defined within said members.

Additional optional and preferred features are set forth in claims 6 to 30 appended hereto.

An embodiment of the present invention will now be described, by way of example, with reference to the accompanying drawings, in which:
Figure 1 is a perspective view illustrating the two main components of an image capturing apparatus according to the present invention;
Figure 2 is cross-sectional view of the apparatus shown in Figure 1;
Figure 3 is a side view of the apparatus shown in Figure 1;
Figures 4 and 5 are exploded perspective views of the pivot of the apparatus shown in Figure 1;
Figure 6 is a plan view showing the stator part of the pivot in Figure 4;
Figure 7 is a perspective view showing the stator part and the click plate of Figure 4 assembled together;
Figure 8 is a perspective view of the rotor part of the pivot of Figure 4;
Figure 9 is a plan view of the rotor part of the pivot of Figure 4;
Figure 10 is a perspective view illustrating the pivot of Figure 4 with the signal delivery unit connected;
Figure 11 is a plan view illustrating the contact plate of Figure 4;
Figure 12 is a plan view illustrating the clock plate of Figure 4;
Figure 13 is a sectional view taken on line I-I of Figure 11;
Figures 14A through 14C are plan views illustrating the components of the signal delivery unit of Figure 4 separately;
Figure 15 is a plan view illustrating the components of the signal delivery unit of Figure 14 nested;
Figure 16 is a perspective view illustrating a method of winding the nested signal deliver unit of Figure 14;

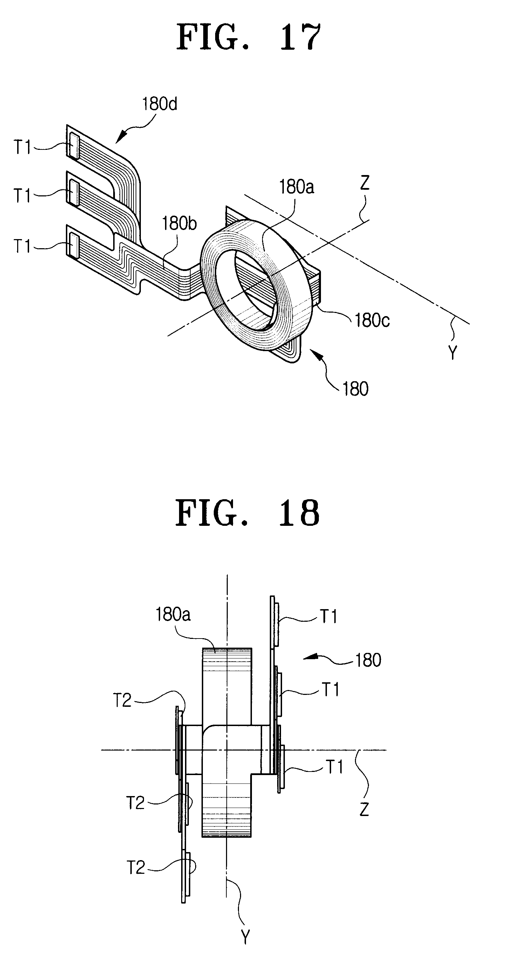

Figure 17 is a perspective view illustrating the disposition of the nested signal delivery unit in the image capturing apparatus of Figure 1;
Figure 18 is a sectional view of the nested signal delivery unit illustrated in Figure 17 viewed from a side;
Figure 19 is a sectional view illustrating winding of a portion of the nested signal delivery unit of Figure 17;
Figure 20 is a sectional view illustrating straight portions of the nested signal delivery unit of Figure 15;
Figure 21 is a perspective view illustrating the nested signal delivery unit being assembled to the pivot;
Figure 22 is a perspective view illustrating a sub-circuit board being assembled to the pivot;
Figure 23 is a plan view illustrating the state of the pivot prior to it being assembled into the housing;
Figure 24 is a plan view illustrating the assembled state of the hinge after it is rotated from the position of Figure 23;
Figure 25 is a sectional view taken on line II-II of Figure 24;
Figure 26 is a perspective view illustrating the pivot pre-assembled to the main body; and
Figure 27 is a plan view illustrating the pivot coupled to the main body.

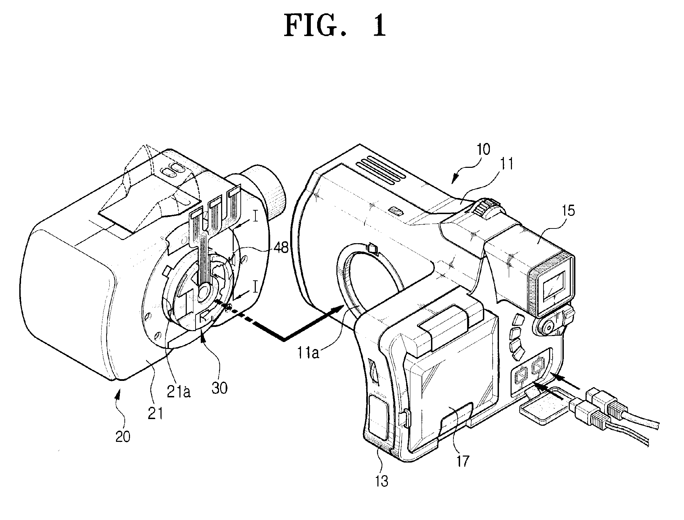

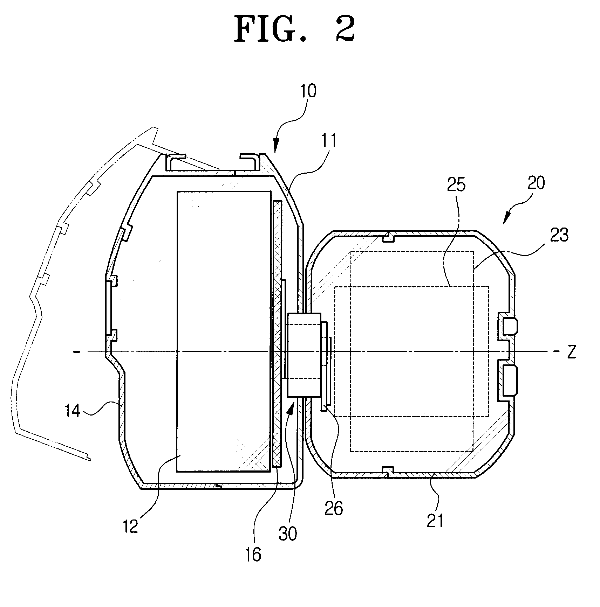

Referring to Figures 1 and 2, a camera according to the present invention includes a body 10, a camera system 20 connected to the body 10, a pivot 30 for rotatably connecting the body 10 and the camera system 20 and a signal delivery unit 180.

Inside the body 10 is a main body 11, having a moving deck 12 for recording moving pictures and a sub body 13 protruding from a side of the main body 11. The moving deck 12 is opened and closed by a deck door 14 which is movably disposed on the lower portion of the main body 11. Because the moving deck 12 used in the body 10 is well known to those skilled in the art and is commonly used in a conventional camcorders, detailed description of it will be omitted. The main body 11 is also provided with a view finder 15, which displays the image being captured or reproduced images. An LCD panel 17 is movably mounted on the sub body 13.

The camera system 20 includes a housing 21, movably disposed on the body 10, and a camera unit housing a plurality of image sensor, each having a different resolution. The housing 21 is rotatably connected to the body 10 by the pivot 30. Accordingly, the housing 21 is movably connected to the side of the body 10 so that the housing 21 can reciprocatively rotate through about 270° about an axis Z.

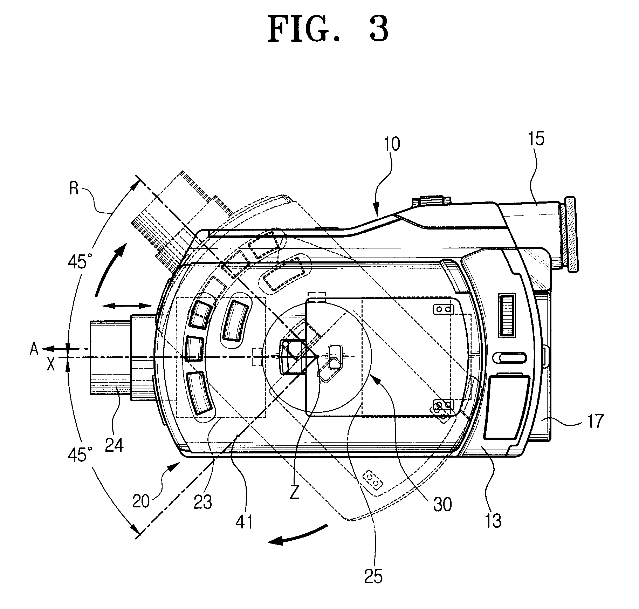

As shown in Figure 3, the camera unit includes a first image sensor 23 that provides a digital still camera (DSC) function and a second image sensor 25 that provides a digital video camera function. The digital video camera sensor 25 has a lower resolution and fewer pixels than the digital still camera sensor 23 and is used to capture moving images.

The first image sensor 23 has the same structure as employed in conventional digital still cameras and is provided with a zoom lens 24. The second image sensor 25 has the same structure as employed in conventional camcorders. The respective image sensors 23, 25 are arranged opposite each other on respective sides of the axis Z and are directed in opposite directions. The image sensors 23, 25 are separately and when one is in operation, the other one is not in operation. Therefore, which image sensor 23, 25 is active depends upon the position of the housing 21 and which sensor 23, 25 is within a predetermined operational range R. The image sensors 23, 25 are exposed at opposite ends of the housing 21. If the first image sensor 23 is positioned within about ±45°with respect to the capture direction A, it operates, while the other image sensor 25 is inactive. As shown in Figure 3, when the image sensor 23 is in the active range R, the control unit receives a signal indicative of the rotational position of the pivot 30 and thus, subsequently shifts to 'DSC' mode for capturing still images. The control unit then controls the operation of the image sensor 23. In the opposite case, when the first image sensor 23 is out of the active range R and the second image sensor 25 in the range R, a signal indicative of the rotational position of the pivot 30 is received and the control unit shifts to 'DVC' mode, in which moving images are captured, and controls the operation of the second image sensor 25.

In the body 10, there also is a main circuit board 16 and a sub circuit board 26 is housed in the housing 21. The main circuit board 16 and the sub circuit board 26 are electrically connected to each other for signal transmission and reception. The sub circuit board 26 is also electrically connected to the first and the second image sensors 23, 25. The circuit boards 16, 26 are arranged in parallel with an axis direction Y, which is orthogonal with respect to the axis Z. With this arrangement, the circuit boards 16, 26 are arranged in the body 10 and the housing 21 efficiently using the spaces, while being easily connected to the signal delivery unit 180.

As shown in Figure 1, the pivot 30 is disposed in a connection area between the housing 21 and the body 10. The pivot 30 connects the housing 21 to the body 10 so that the housing 21 can rotate about the axis Z. To accommodate the pivot 30, there are pivot holes 11a, 21a formed in the housing 21 and the main body 11. The pivot holes 11a, 21a are of the same size and formed in corresponding positions.

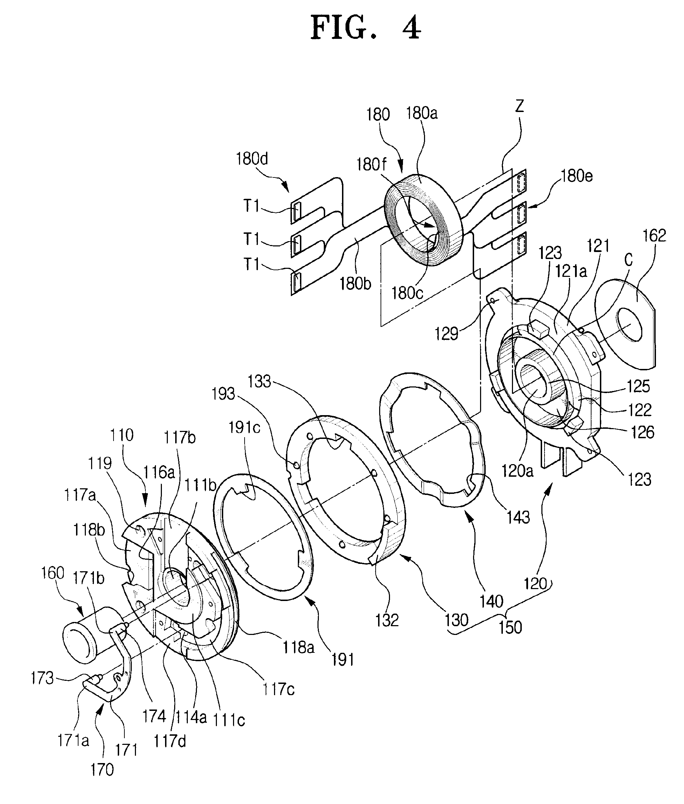

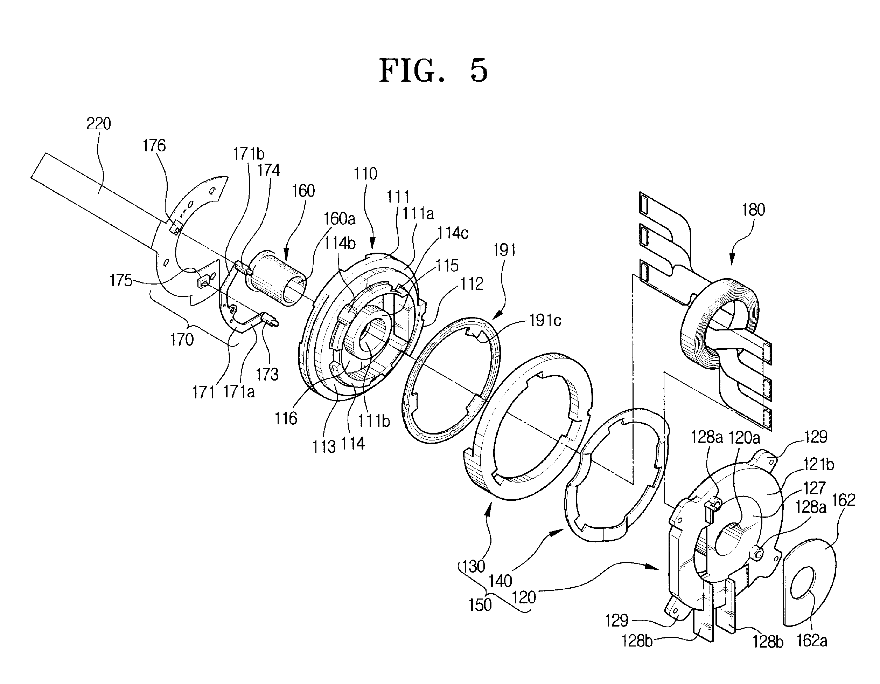

Referring now to Figures 4 and 5, the pivot 30 connects the main body 11 and the housing 21 through the respective pivot holes 11a, 21a and comprises a stator 110 secured to the body 10 and a rotor 150, secured to the housing 21 and connected to the stator 110 to rotate within a predetermined angle. The pivot 30 further comprises a shaft 160 that connects the stator 110 and the rotor 150 in such a manner that the stator 110 and the rotor 150 rotate relative to each other within a predetermined angle, a sensing unit 170 that senses the rotational position of the rotor 150 with respect to the stator 110 and a signal delivery unit 180 that electrically connects the body 10 with the camera system 20.

The stator 110 comprises a body 111, inserted through the pivot hole 11 a and secured in the main body 11, and a radial protrusion 112 formed on a first surface 111a of the body 111. The stator 110 further comprises a first rib 113 protruding from the first surface 111a to a different circumference from the radial protrusion 112, and a second rib 114 protruding from the first rib 113.

The body 111 has a shaft hole 111b at the centre to receive the shaft 160. A collar 115 is formed around the shaft hole 111b. A radial protrusion 112 restricts the rotational movement of the rotor 150 when the radial protrusion 112 is rotated with respect to the rotor 150.

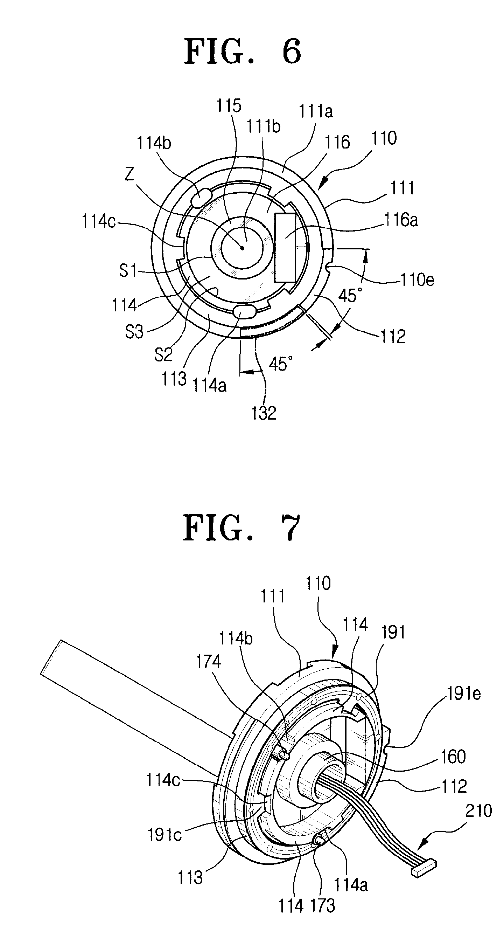

Referring to Figure 6, the radial protrusion 112 is provided in the outer margin of the front face 111a of the body 111 and has an angular extent of approximately 45° around axis Z. The movement of the radial protrusion 112 and an axial protrusion 132 on the rotor 150 can contact each other and together have an angular extent of approximately 90° around axis Z. Therefore, the radial and axial protrusions 112, 132 preclude rotational movement of the housing 21 for an angle of approximately 90°. Accordingly, the housing 21 is allowed to rotate reciprocatively through 360° less the angular displacement of the respective protrusions 112, 132 (which is approximately 90°). As a result, the housing 21 can rotate through approximately 270°.

An annular step 113 protrudes from the front face 111a. The annular step 113 has an outer diameter smaller than maximum diameter of the body 111.

A circular wall circular wall 114 protrudes coaxially from the annular step 113 and has a smaller diameter than the annular step 112. Each of the annular step and the circular wall 113, 114 is either directly or indirectly in contact with the rotor 150. The front face 111a and the radial protrusion 112 are in contact with the rotor 150.

There is circular recess 116 bounded by the collar 115 and the circular wall 14. The annular hole 116 shares the outer circumference of the collar 115 and the inner surface of the circular wall 114 as an inner and an outer surfaces s1, s2, and has a bottom surface s3 between the inner and the outer surfaces s1, s2. A part of the signal delivery unit 180, which is wound a predetermined number of times, is received in the circular recess 116. Enough space is provided between the inner and the outer surfaces s1, s2 so as to allow a wound portion of the signal delivery unit 180 to reside in therebetween.

At the bottom surface s3 of the circular recess 116, there is formed a through hole 116a of a suitable size for the signal delivery unit 180 to pass therethrough. The through hole 116a is formed in the stator 110 parallel to axis Z.

A plurality of recesses 114c is formed in the outer face of the circular wall 114 for locating and securing a click plate 191 (which is described in greater detail below). The recesses 114c are formed at irregular intervals about axis Z, so that the click plate 191 can only be mounted in one orientation.

Additionally, the stator 110 is provided with a pair of sensing holes 114a, 114b formed in the back face 111c of the stator 110. As shown in Figure 7, cam pins 173, 174 of a sensing unit 170 (which is described in greater detail below) protrude f project through the sensing holes 114a, 114b.

Referring back to Figure 4, a first receiving recess 117a is formed in the back face 111c of the stator 110 and is in communication with a through hole 116a. The first receiving recess 117a extends from the through hole 116a to the outer circumference of the body 111. The signal delivery unit 180 passes through the through hole 116a and is received in the first receiving recess 117a in a bent state at an angle of approximately 90°. The first receiving recess 117a is deeper than the thickness of the signal delivery unit 180.

There is a second receiving recess 117b formed on the back face 111c of the stator 110, and is connected with the shaft hole 111b. The second receiving recess 117b receives a signal delivery member 210 after the signal delivery member 210 is passed through the shaft 160, which is fit in the shaft hole 111b. The second receiving recess 117b extends from the shaft hole 111b to the outer circumference of the body 111, and is formed to have an enough depth so that the signal delivery member 210 can be received in the second receiving recess 117b in a bent state without protruding from the back face 111 c.

Additionally, there is a third receiving recess 117c formed in the back face 111c of the stator 110. The third receiving recess 117c includes the openings of the sensing holes 114a, 114b. The third receiving recess 117c is formed such that it is centred about the second axis Z.

A fourth receiving recess 117d is formed in the back face 111c of the stator 110 on a higher plane than the third receiving recess 117c. The fourth receiving recess 117d receives a signal cable 220 which connects the sensing unit 170 to the main circuit board 16 inside the body 10. The fourth receiving recess 117b overlaps, in part, the second receiving recess 117b which is formed on a higher plane than the second receiving recess 117b. As a result, the signal cable 220 in the fourth receiving recess 117d supports the signal delivery member 210 in the second receiving recess 117b by close contact. The fourth receiving recess 117d extends from a side of the third receiving recess 117c to the outer circumference of the body 111.

The stator 110 further includes a plurality of connecting grooves 118a, 118b formed at the outer circumference of the body 111. Support brackets 51, 53 (described in greater detail below) fit in to the connecting grooves 118a, 118b. More specifically, as the stator 110 is passed through the pivot hole 11a in the body 10, the support brackets 51, 53 are fitted into the connecting grooves 118a, 118b and then secured to the inner wall of the main body 11. Accordingly, the stator 110 is secured to the body 10.

A plurality of screw holes 119 are formed in communication with the connecting groove 118b in the back face 111c of the body 111. Screws are inserted into the screw holes 119 to fix the support bracket 53 in the connecting groove 118b.

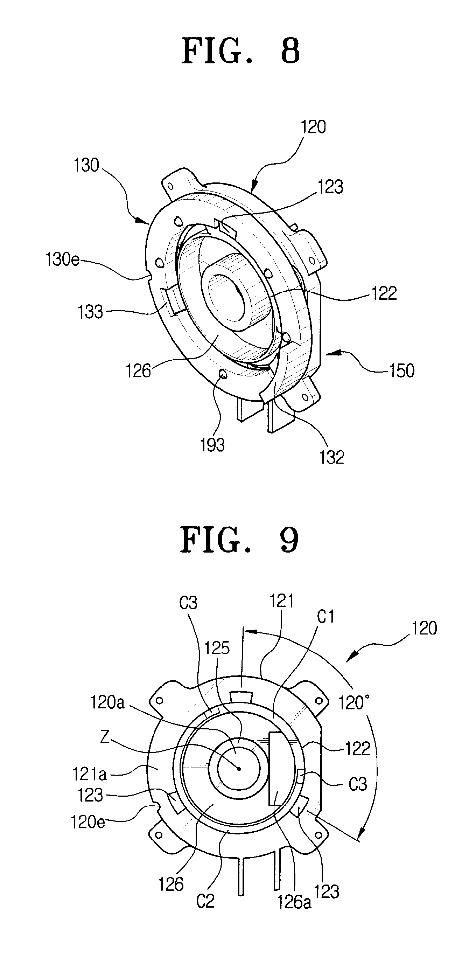

Referring now to Figure 8, the rotor 150 includes a mounting part 120 fixed onto the housing 21, a contact plate 130 connected with the mounting part 120 and a plate spring 140 disposed between the mounting part 120 and the contact plate 130.

Referring to Figure 9, the mounting part 120 includes a body 121 having a shaft hole 120a threrethrough for receiving the shaft 160 and an annular rib 122 protruding from the front face 121a of the body 121. The contact plate 130 and the plate spring 140 are fastened closely around the annular rib 122. Co-operating locating elements are formed on the annular rib 122, the contact plate 130 and the plate spring 140 so that the plate spring 140 and the contact plate 130 are held in the correct orientation with respect to the annular rib 122. The locating elements include a plurality of projections 123 formed on the outer circumference of the annular rib 122, toward the front face 121a of the mounting part 120, and fixing notches 133, 143 formed in the inner margins of the contact plate 130 and the plate spring 140. The projections 123 and the fixing notches 133, 143 are preferably formed at uniform intervals. For example, three fixing holes 133, 143 can be formed at 120° spacings. By locating the contact plate 130 and the plate spring 140 on the mounting part 120 with the projections 123, the contact plate 130 and the plate spring 140 are able to be rotated together.

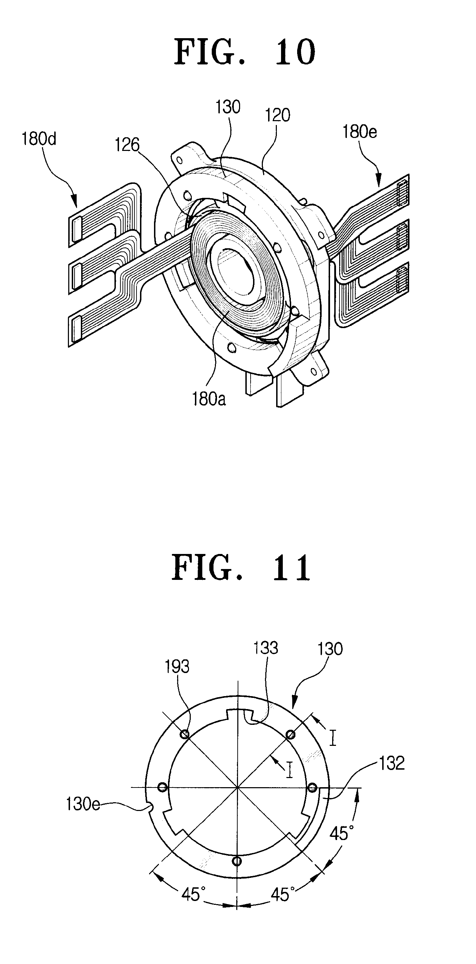

The mounting part 120 additionally includes an annular trough 126 which is defined by the annular rib 122 and a collar 125 around the shaft hole 120a. More specifically, the annular trough 126 is defined between the outer face of the collar 125 and the inner face of the annular rib 122. As shown in Figure 10, the annular trough 126, like the annular trough 116 of the stator 110, receives the wound portion of the signal delivery unit 180. Accordingly, it is preferred that the annular trough 126 be in symmetrical configuration with the annular trough 116 of the stator 110.

An aperture 126a is formed in the bottom of the annular trough 126 and the signal delivery unit 180 extends therethrough. A seating recess 127 for a washer 162 is formed in the back face 121b of the mounting part 120. The seating recess 127 is in communication with the aperture 126a which penetrates through the mounting part 120. The seating recess 127 is formed around the shaft hole 120a and is substantially circular. The washer 162 is seated in the seating recess 127 and surrounds the shaft 160.

The washer 162 is attached to one end of the shaft 160, which is passed through the shaft holes 111b, 120a of the stator 110 and the mounting part 120, to connect the stator 110 and the rotor 150 securely. Accordingly, as the shaft 160 is received in the fastening hole 162a of the washer 162, the end of the shaft 160 is secured in position. The shaft 160 is tubular with an axial hole 160a for the signal delivery member 210 to extend through. The signal delivery member 210 includes ten signal lines for carrying high speed electric signals transmitted through the signal delivery unit 180. The signal lines of the signal delivery member 210 are provided in a bundle. The signal delivery member further includes a power line.

A plurality of supporting bosses 128a are formed on the back face 121 of the mounting part 120. Some of the supporting bosses 128a have screw holes therein. The sub circuit board 26, which is electrically connected to the signal delivery unit 180, is seated on the supporting bosses 128a and fastened by screws.

A pair of parallel aligning ribs 128b protrude from the back face 121a of the mounting part 120 for aligning the signal delivery member 210 which extends through the shaft hole 120a. The aligning ribs 128b project from the back face 121a of the body by the same amount as the bosses 128a. As a result, the sub circuit board 26 is supported by contact with the supporting bosses 128a and the aligning ribs 128b. The space between the back face 121a of the mounting part 120 and the sub circuit board 26 is sufficient to allowing the signal delivery unit 180 and the signal delivery member 210 to pass through without interruption.

A plurality of tabs 129 protrude radially from the circumference of the body 121. Each tab 129 has a screw hole through it. The mounting part 120 is secured to the housing 21 by screws screwed into the screw holes. Some of the tabs 129 extend the back face 121a of body 121 and others extend the front face 121b of the body 121. The tabs 129 are formed about the second axis Z, with equal heights and in symmetrical relation with each other to make fastening to the housing 21 more efficient and secure. This is described in greater detail below.

A cam surface C with a varying height is provided around the annular rib 122 to detecting the position of the rotor 150 relative to the stator 110. Referring to Figures 8 and 9, the cam surface C includes an operating surface C1 which has substantially the same height as the annular rib 122, a non-contact surface C2 which is lower than the operating surface C1 and an inclined surfaces C3 connecting the ends of the operating surface C1 to corresponding ends of the non-contact surface C2. The operating surface C1 faces the circular wall 114 of the stator 110. Accordingly, as cam pins 173, 174 protrude through the sensing holes 114a, 114b of the circular wall 114, the cam pins 173, 174 are pushed backward by contact with the operating surface C1. Because the non-contact surface C2 is lower than the operating surface C1, the cam pins 173, 174 are not in contact with the non-contact surface C2. The inclined surfaces C3 guide the cam pins 173, 174 into their retracted positions as the rotor 150 is turned. The angular length of the operating surface about axis Z is less than the angular separation of the cam pins 173, 174 about the axis Z. Consequently, at most only one of the cam pins 173, 174 can be pressed by the operating surface C1 at any time. Accordingly, the length of the operating surface C1 determines the angular ranges during which each of the first and second image sensor 23, 25 are active, the cam pins 173, 174 being associated with respective image sensor 23, 25.

As shown in Figure 8, the contact plate 130 fits around the annular rib 122 and has the same or smaller diameter than the stator 110. An axial protrusion 132 projects from the circumferential margin of the contact plate 130 towards the stator 110.

Referring to Figure 11, the axial protrusion 132 is formed at the extreme edge of the contact plate 130. Movement of the axial protrusion 132 is blocked in the radial protrusion 112 to set the limit the rotational movement range of the housing 21 with respect to the body 10. In this embodiment of the present invention, the combined angular length of the radial and axial protrusions 112, 132 is approximately 90°, which limits rotational movement of the housing 21 to a range of 270°. The radial and axial protrusions 112, 132 each have an angular length of approximately 45°.

The plate spring 140 is made of metal and can be compressed and decompressed in the direction of the axis Z, to urge the contact plate 130 toward the stator 110. The stator 110 in its normal state is inhibited from rotating with respect to the rotor 150 and can only be rotated by application of a force over a predetermined threshold.

Preferred angular positions of pivot 30 are defined by a ring 191 having a circumferential array of holes 191a and a plurality of balls 193 similarly arrayed in the contact plate 130. In each preferred position, each of the balls 193 is received in a respective one of the holes 191a. The ring 191 is made of metal.

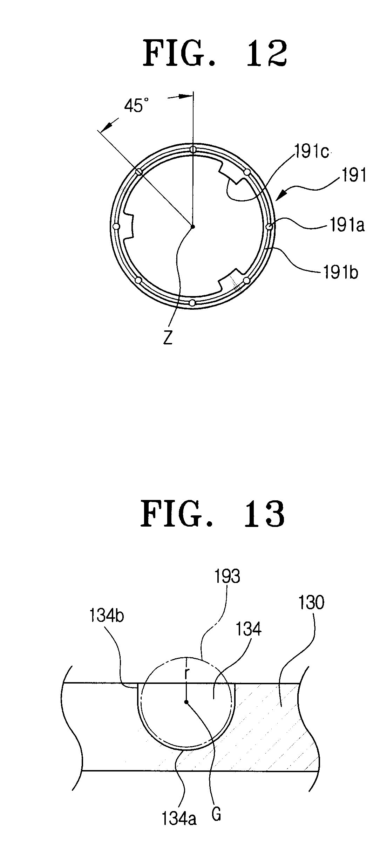

As shown in Figure 12, the depressions 191a are angularly spaced by approximately 45°. Accordingly, as the ring 191 is rotated, the balls 193 repeatedly click into and out of the holes 191a. The ring 191 further includes a circular guide groove 191b connecting the holes 191a. More specifically, the guide groove 191b forms a track along which the click balls 193 roll between the holes 191a. The guide groove 191b is shallower than the holes 191a.

Referring to Figure 7, the ring 191 is secured in the circular wall 114 and seated on the step 113 of the stator 110. The ring 1191 and the circular wall 114 are respectively provided with a locating elements to set their relative positions and secure the click plate 191 with respect to the circular wall 114. The locating elements includes a plurality of positioning notches 114c, formed in the outer face of the circular wall 114, and a plurality of complementary tabs 191c, formed on the inner circumference of the ring 191. The positioning notches 114c and the positioning tabs 191c are formed at irregular intervals. Because the positions of the holes 191a are determined during the initial connection of the click plate 191 with respect to the stator 110, the 'clicking' occurs at predetermined positions. For example, positioning can be made properly with respect to the cam pins 173, 174 so that clicking can occur in every on/off switching of modes between DVC and DSC modes.

The click balls 193 are made of metal. As shown in Figure 13, the click balls 193 protrude from a surface of the contact plate 130 for rolling motion. To accomplish the rolling motion, click ball recesses 134 are formed in the surface of the contact plate 130 with a radius greater than that of the click balls 193. Accordingly, the click balls 193 can be seated with their centres of gravity G stably positioned in the respective click ball recesses 134. Therefore, the click balls 193 are not easily dislodged from the click ball recesses 134. Preferably, lubricating oil is applied to the click ball recesses 134. Each click ball recess 134 includes a spherical surface 134a in which the click ball 193 is closely seated. An upright cylindrical surface 134b is formed at the entry part of the click ball recess 134. Due to this structure, the click balls 193 can be easily inserted in the click ball recesses 134.

As shown in Figure 11, the click balls 193 are arranged around the axis Z and along a surface of the contact plate 130 at intervals of approximately 45°. The click balls 193 are not arranged on the contact plate 130 where the fixing notches 133 are formed.

In order to make sure that the clicking occurs in the correct positions, clicking locating elements are provided to the stator 110, the mounting part 120 and the contact plate 130, respectively. The clicking locating elements include positioning slits 110e, 120e, 130e formed in the respective outer circumferences of the fixing plate 110, the mounting part 120 and the contact plate 130. When the clicking locating elements are assembled, as shown in Figure 8, the mounting part 120 and the contact plate 130 are first assembled with each other, with the mounting body slit 120e and contact plate slit 130e being aligned with each other and the plate spring 140 being interposed therebetween. The stator 110 is then placed in contact with the contact plate 130 and with the mounting body slit 120e, and the contact plate slit 130e is aligned with the fixing bracket slit 110e. Accordingly, the respective click balls 193 and the click holes 191a are docked in the intended positions, whereby the clicking action can occur. The cam pins 173, 174 of the sensing unit 170 (described in greater detail below) and the cam surface C can also be made to align with each other in assembly process.

The sensing unit 170 is provided on the stator 110 and/or the rotor 150 to sense the angular position of the rotor 150 with respect to the stator 110. Accordingly, the above-mentioned 'DSC mode' is determined based on a signal from the sensing unit 170. The sensing unit 170 includes an elastic piece 171 disposed on the back face 111c of the body 111 of the stator 110, a pair of cam pins 173, 174, disposed at opposite ends 171a, 171b of the elastic piece 171, and a pair of switches 175, 176 associated with the cam pins 173, 174.

The elastic piece 171 is preferably made of a metal material, and is inserted in the third receiving recess 117c of the front face 111a of the body 111. The elastic piece 171 is secured onto the bottom of the third receiving recess 117c, approximately at the middle portion thereof by proper fasteners such as screws. Both ends 171a, 171b of the elastic piece 171 remain as free ends to allow for elastic deformation and recovery.

Referring to Figure 7, the cam pins 173, 174 are supported at opposite ends 171a, 171b of the elastic piece 171 and protrude towards the front face 111a of the body 111 through the sensing holes 114a, 114b formed in the body 111. The cam pins 173, 174 are positioned to protrude through the section of the circular wall 114 having the sensing holes 114a, 114b therein and thus face the cam surface C of the mounting part 120. Accordingly, if either of the cam pins 173, 174 contacts the operating surface C1 of the cam surface C during rotation of the mounting part 120, the contacting cam pin 173, 174 is pushed backward, elastically deforming one end of the elastic piece 171 and thereby closing the corresponding switch 175, 176 to generate a signal.

The pair of switches 175, 176 are arranged at opposite ends 171a, 171b of the elastic piece 171. The switches 175, 176 are supported by the signal cable 220, which is mounted in the fourth receiving recess 117d. In one embodiment of the present invention, the signal cable 220 is a flexible flexprint cable (FPC), supporting the switches 175, 176, and also connecting the switches 175, 176 to the main circuit board 16 of the body 10. The signal cable 220 is also mounted in the fourth receiving recess 117d by suitable fasteners, such as screws.

The signal delivery unit 180 electrically connects a first member with a second member, which is rotatably disposed with respect to the first member, to enable transmission of signals between the first element and the second element. In one embodiment of the present invention, the body 10 is the first member and the camera system 20 is the second member.

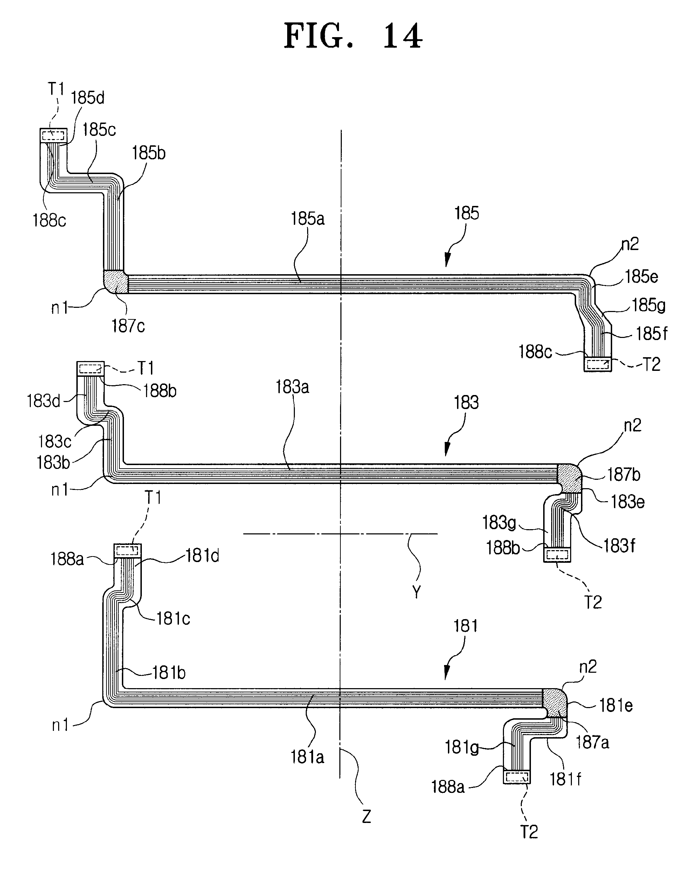

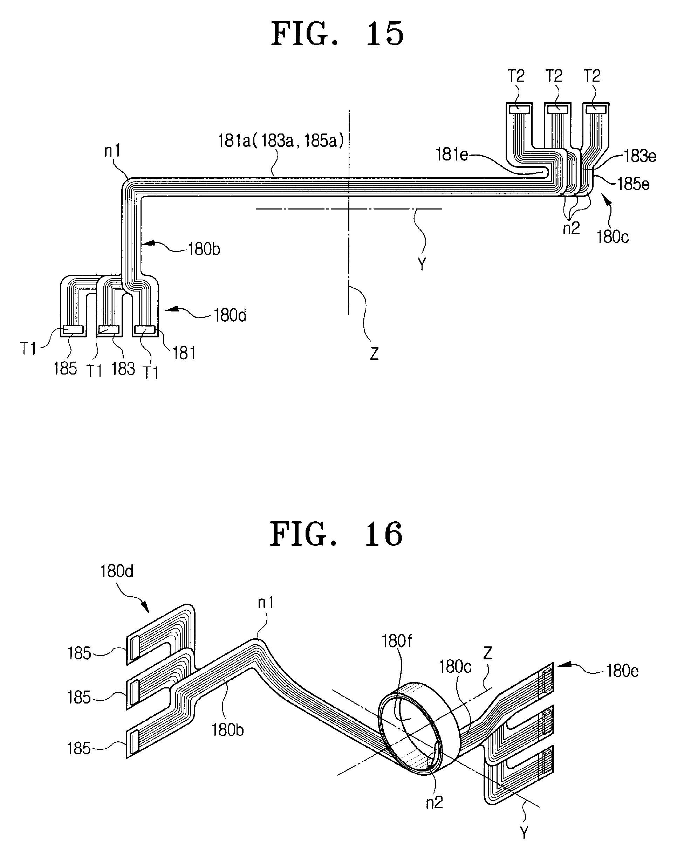

The signal delivery unit (cable bundle) 180 is a cable bundle having a plurality of signal cables therein and as shown in Figure 14, the signal delivery unit 180 includes a first, second and third signal cables 181, 183, 184 of different lengths. The cable bundle 180 includes a winding portion 180a, where the first, the second and the third signal cables 181, 183, 184 are stacked, and first and second extensions 180b, 180c (shown in Fig. 16) extending in parallel to the axis Z of the winding portion 180a and to both sides. The cable bundle 180 further includes a first branch 180d (Fig. 16) extending from the first extension 180b with respect to the signal cables 181, 183, 185, a second branch 180e extending from the second extension 180c with respect to the respective signal cables 181, 183, 185, and first and second connectors T1, T2 respectively supported on the first and the second branches 180d, 180e.

The number of windings that can be made in the winding portion 180a is preferably and approximately 3.5 times, and the winding portion 180a is disposed in the pivot 30 in a releasable and rewindable manner for a predetermined angle. The winding portion 180a allows relative rotation of the rotor 150 through approximately 270° with respect to the stator 110. The winding portion 180a is received in the circular recess 116 of the stator 110 and in the annular trough 126 of the mounting part 120. When the winding portion 180a is wound, a hole 180f (shown in Figure 16) for the collars 115, 125 is left in the centre thereof.

Referring to Figures 15 and 16, the signal cables 181, 183, 185 are stacked and then the winding portion 180a is wound, preferably, through 3.5 turns. Accordingly, the innermost straight portion of the first signal cable 181, i.e., the first straight portion 181a is the shortest, followed by the interposed (or second) straight portion 183a and then the outermost (or third) straight portion 185a respectively. When the first, second and third straight portions 181a, 183a, 185a are stacked, the two corners n1, n2 of the respective straight portions 181a, 183a, 185a are aligned with one another. The 'corners' denote the bent areas of the straight portions 181a, 183a, 185a which are bent to 90° with respect to the second axis Z. The corners can also be referred to as "bent portions". After the signal cables 181, 183, 184 are wound approximately 3.5 turns, the winding portion 180a is spiral shaped with a hollow space (180F) defined therein. Figure 15 is a plan view illustrating the respective signal cables 181, 183, 185 being turned upside down from the state shown in Figure 14.

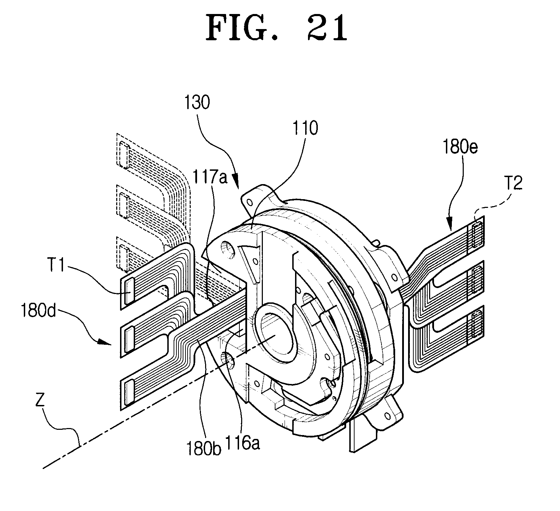

As shown in Figure 21, the first extension 180b is inserted into the body 10 through the through hole 116a of the stator 110. The first extension 180b as inserted is then bent as indicated by the phantom line approximately to 90° at the bending portion n1 so as to be substantially perpendicular to the second axis Z and also to be in close contact with the first receiving recess 117a. The first extension 180b includes the first extensions 181b, 183b, 185b nesting on one another, which are bent at the first bending portion n1 of the signal cables 181, 183, 185 at an angle of approximately 90°. The first extensions 181b, 183b, 185b of the signal cables 181, 183, 185 are formed in the same length and width.

The first branched portion 180d branches from the first extension 180b and comprises branches formed by respective signal cables 181, 183, 185. The first branched portion 180d includes first end connections 181d, 183d, 185d, which support the contacts of the first connector T1 on their ends, and first split-extensions 181c, 183c, 185c for connecting the first end connections 181d, 183d, 185d with the first extensions 181b, 183b, 185b. The first end connections 181b, 183b, 185b are substantially parallel to the rotational axis Z. The first end connections 181d, 183d, 185d are connected to the main circuit board 16 in the body 10. In order to connect the first end connections 181d, 183d, 185d to the first extensions 181b, 183b, 185c correctly, the first split extensions 181c, 183c, 185c extend from the first extensions 181b, 183b, 185b by different amounts and substantially parallel to axis Y perpendicular to axis Z.

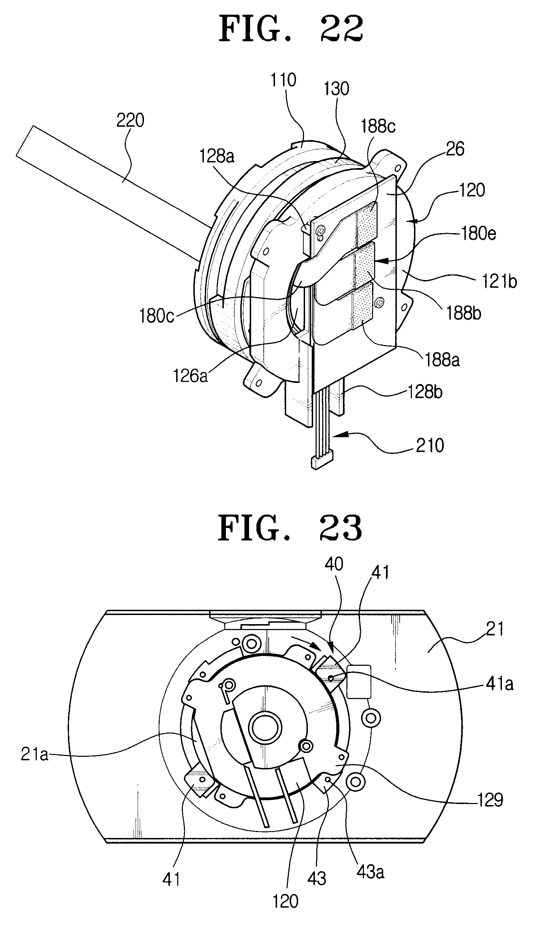

The second extension 180c extends substantially parallel to the first extension 180b, but in the opposite direction and enters into the housing 21 through the aperture 126a of the mounting part 120 (see Figure 22). The second extension 180c is shorter than the first extension 180b. This is because the sub circuit board 26 is directly assembled to the mounting part 120. The sub circuit board 26 is smaller than the main circuit board 16. Accordingly, the second extension 180c is shorter than the first extension 180b and is bent approximately 90° immediately after the first extension 180b passes out of the aperture 126a so that the first extension 180b can contact the sub circuit board 26.

As shown in Figure 15, the second extension 180c includes second extensions 181e, 183e, 185e of respective signal cables 181, 183, 185 which are stacked on one another and bent from the second bending portion n2 by approximately 90°. The second extensions 181e, 183e, 185e have the same length in the second axis Z.

The second branched portion 180e branches from the second extensions 181e, 183e, 185e of the respective signal cables 181, 183, 185. The second branch 180e includes second end connections 181g, 183g, 185g, parallel with the first end connections 181d, 183d, 185d, and second split extensions 181f, 183f, 185f for connecting the second end connections 181g, 183g, 185g and the second extensions 181e, 183e, 185e. The second extensions 181g, 183g, 185g have the same length and are connected to the sub circuit board 26 in the camera system 20.

The second split extensions 181f, 183f, 185f extend from the second extensions 181e, 183e, 185e by different amounts and in a direction perpendicular to the second axis Z to connect to the second connections 181g 183g, 185g.

The first connector T1 by the first end connections 181d, 183d, 185d. When the cable bundle 180 is assembled, the first connector T1 is arranged substantially perpendicular with respect to the axis Y. The first connector T1 is electrically connected to the main circuit board 16.

The second connector T2 is provided by the second end connection 181g, 183g, 185g. The second connector T2 are arranged substantially perpendicular to the axis Y and electrically connected to the sub circuit board 26. The first and the second connectors T1, T2 face the same direction.

The signal cables 181, 183, 185 constructed as described above are preferably flexprint cables (FPC) which have signal lines on both sides. For example, 20 signal lines are provided one each of the signal cables 181, 183, 185 so that image signals captured by the image sensors 23, 25 can be transmitted through the signal lines.

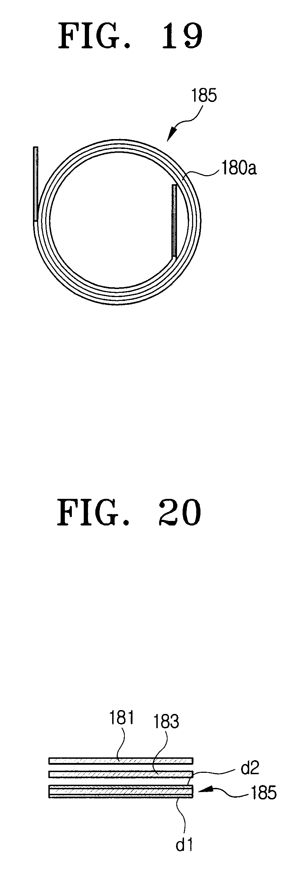

One of the signal cables 181, 183, 185 is thicker than the others. For example, as shown in Figure 20, the third signal cable 185 is thicker than the other signal cables 181, 183. To make the third signal cable 185 thicker than the others, coating layers d1, d2 are provided to both sides of the third signal cable 185. The material used for the coating layers d1, d2 is a material that is effective to substantially block the interference. For example, d₁ and d₂ can be made up of a plastic shielding material, such as PVC or metal foil. Accordingly, crosstalk is reduced.

The thickest signal cable 185 is used to transmit the DVC signal, i.e. moving image signals.

Referring again to Figure 14, first reinforcement members 187a, 187b, 187c are provided on the bending portions n1, n2 of the respective signal cables 181, 183, 185. The first reinforcement members 187a, 187b, 187c are slimmer in thickness than the signal cables 181, 183, 185, and can be joined by a chemical bond (i.e., glue). The first reinforcement members 187a, 187b, 187c can be a film made of PVC. The reinforcement members 187a, 187b, 187c can be provided to one or both of the bending portions n1, n2 of the signal cables 181, 183, 185. The first reinforcement members 187a, 187b, 187c prevent the first bending portions n1, n2 from deformation and breakage, and also from peeling off by the friction from the contact with the pivot 30.

Each signal cable 181, 183, 185 has a thickness ranging from at or about 0.15mm to about 0.24mm. Each first reinforcement member has a thickness from at or about 0.12mm to at or about 0.13mm. The first and the second signal cables 181, 183 can have a thickness from at or about 0.15mm to at or about 0.17mm, while the third signal cable 185 can have a thickness from at or about 0.22mm to at or about 0.24mm.

Second reinforcement members 188a, 188b, 188c are provided at both ends of the respective signal cables 181, 183, 185. The second reinforcement members 188a, 188b, 188c are provided opposite the connectors T1, T2. By use the second reinforcement members 188a, 188b, 188c, connections between the connectors T1, T2 and the signal lines are secured and both ends of the signal cables 181, 183, 185 are protected against deformation. Preferably, the second reinforcement members 188a, 188b, 188c are made of a material such as a PVC and are thicker than the signal cables 181, 183, 185, preferably having a thickness from at or about 0.4mm to at or about 0.5mm.

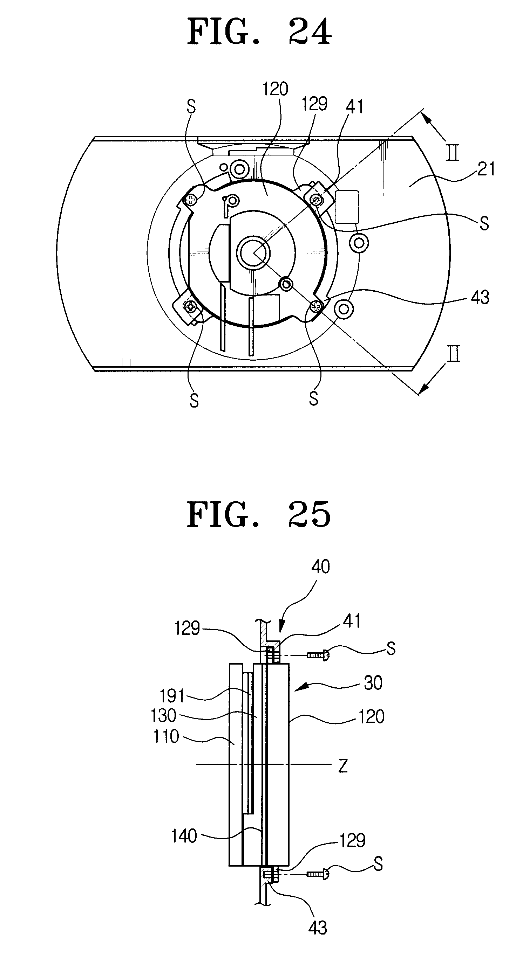

As shown in Figure 21, there is a fastening unit to fasten the signal delivery unit 180, the stator 110 and the rotor 150 to the housing 21 and to the body 10. Referring to Figures 23 and 24, the fastening unit includes a first fastening unit 40 to fasten the assembled pivot 30 to the housing 21. The first fastening unit 40 includes a holder 41 protruding from the circumference of the hole 21a of the housing 21 and supporting bosses 43 provided among the holders 41. The holders 41 are created on the circumference of the hinge hole 21a which is cut and made to protrude. The holders 41 have screw holes 41a therein. The tabs 129 are fastened with the screw holes 41a of the holders 41, thus setting the relative positions of the various components. The holder 41 and the tabs 129 are fastened with each other by the screws (S). As the mounting part 120 is turned to the right from a state wherein the tabs 129 and the holders 41 are in proximity with each other (Figure 23), the tabs 129 are inserted and thus aligned with the holders 41 (Figure 25). The tabs 129 and the holders 41 are fastened by the screws (S). The tabs 129 are at the same height as the first surface 121a of the mounting part 120 and the holders 41 are provided in a symmetrical fashion with respect to the second axis Z.

The supporting bosses 43 protrudes from the inner surface of the housing 21 and has a screw hole 43a therein. The tabs 129 are fastened to the supporting bosses 43 by the screws (S).

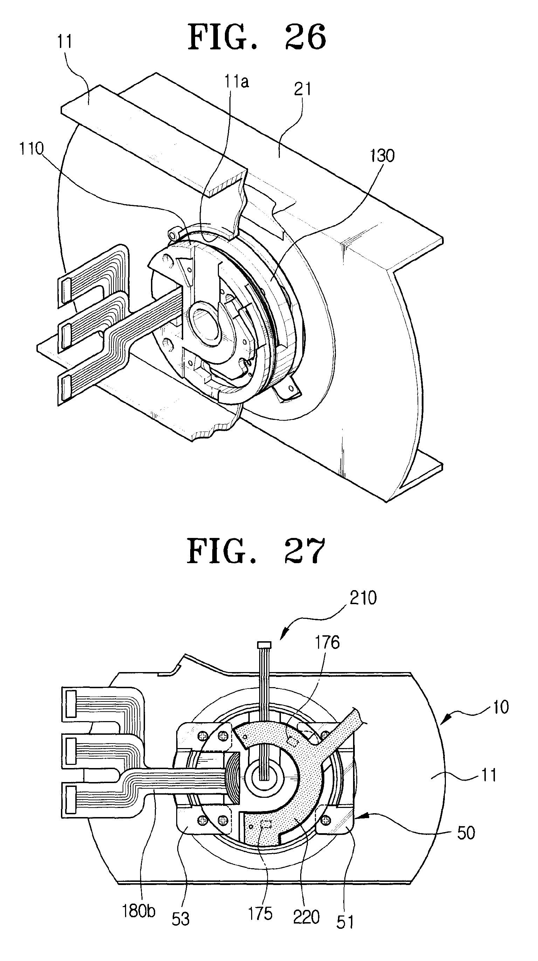

As shown in Figure 26, the fastening unit further includes a second fastening unit 50 to fasten the pivot 30 to the body 10. Referring now to Figure 27, the second fastening unit 50 includes a first and a second supporting brackets 51, 53. The first supporting bracket 51 is partially inserted in the first connecting groove 118a (see Figure 4) which is formed in the outer circumference of the stator 110 and then fastened to the inner wall of the main body 11. The second supporting bracket 53 is inserted in the second connecting groove 118b (see Figure 4) opposite to the first connecting groove 118a and then fastened to the stator 110 and the main body 11 by the screws (S).

A description of the assembly process for a camera constructed as described above will now be given. Generally, the assembly process can be divided into assembling the pivot 30, assembling of the assembled pivot 30 with the housing 21 and then assembling of the body 10 with the pivot 30 and housing 21.

The assembly process for the pivot 30 will first be described. As shown in Figure 7, the ring 191 is inserted into the circular wall 114 of the stator 110. The positioning tabs 191c of the ring 191 are aligned with the positioning notches 114c of the stator 110. As a result, the ring 191 is securely connected with the stator 110. However, prior to aligning the positioning tabs 151c of the ring 191 with the positioning notches 114c of the stator 110, the sensing unit 170 has already to have been fastened to the stator 110.

Next, as shown in Figure 8, the rotor 150 is assembled. To assemble the rotor 150, the plate spring 140 and then the contact plate 130 are inserted in the mounting part 120. The plate spring 140 and the fixing holes 133, 143 of the contact plate 130 are then inserted over the projections 123 of the mounting part 120. As a result, the plate spring 140 and the contact plate 130 are secured in a predetermined position with respect to the mounting part 120 and can be rotated together. The mounting part 120 and the contact plate 130 are assembled such that the positioning grooves 120e, 130e are aligned with one another. Prior to beginning the assembly process of rotor 150, the click balls 193 have already to have been assembled in the contact plate 130.

After the rotor 150 has been assembled, the signal delivery unit 180 is assembled to the rotor 150, as shown in Figure 10. The winding portion 180a of the signal delivery unit 180 is received in the annular trough 126 of the mounting part 120, with the second extensions 180b and the second end connections 180e being passed through the aperture 126a of the mounting part 120. In winding the signal delivery unit 180, as shown in Figure 15, the straight portions 181a, 183a, 185a of the signal cables 181, 183, 185 are stacked on one another. The bending portions n2 of the respective signal cables 181, 183, 185 are aligned with one another (which is a slightly different configuration than what is shown in FIG 15) and, as shown in Figure 16, the signal delivery unit 180 is wound to a predetermined inner diameter. The wound signal delivery unit 180 is then half-assembled to the mounting part 120.

The stator 110, after being assembled with the ring 191, is then assembled to the rotor 150 which has been assembled with the signal delivery unit 180. The assembly is performed with the positioning slits 110e of the stator 110 being aligned with the hinge bracket slit 120e and contact plate slit 130e. Next, as shown in Figure 21, with the first extension 180b and the first connection 180d of the signal delivery unit 180 having been passed through the passing hole 116a, the shaft 160 is passed through the stator 110 and the rotor 150 fixed by the washer 162, so that the stator 110 and the rotor 150 are tightly assembled with each other under a predetermined pressure.

As shown in Figure 22, the sub circuit board 26 is assembled to the pivot 30 as described above. The supporting bosses 128a of the mounting part 120 are on the aligning ribs 128b in tight contact, and the sub circuit board 26 is assembled with screws. Next, the second extension 180c that is exposed through the second surface 121b of the mounting part 120 is bent approximately 90° so as to directly connect the second connections 180e to the sub circuit board 26.

As shown in Figure 23, the pivot 30 is assembled so that the pivot 30 passes through the hinge hole 21 a from within the housing 21. Next, the fastening units 129 of the mounting part 120 are positioned in proximity to the holders 41 of the housing 21 and the mounting part 120 is brought in tight contact with the inner wall of the housing 21. Then, the pivot 30 is turned to the right. As a result, and as shown in Figures 24 and 25, the fastening units 129 are overlain with the holders 41 and the supporting bosses 43. By fastening the fastening units 129 to the holders 41 and the supporting bosses 43 with screws, the pivot bracket of the pivot 30 is fastened to the housing 21. In order to minimize the complexity of discussing the assembling process, the sub circuit board 26 and the signal delivery unit 180 are omitted from Figures 23 and 25.

When the pivot 30 and the housing 21 have been assembled together, some components, including the first and the image sensors 23, 25, are mounted in the housing 21 and are connected to the second sub circuit board 26. The signal delivery unit 210 is passed through the hollow space of the shaft 160 to connect with the components mounted in the housing 21.

After the housing 21 with the pivot 30 connected thereto is completely assembled, i.e., when the camera system 20 is completely assembled, and optical arrangement and required tests of the image sensors 23, 25 are completed, the body 10 is connected to the housing 21 by using the pivot 30.

First, as shown in Figure 26, the stator 110 of the hinge unit 30 and the contact plate 130 are passed through the pivot hole 11a of the main body 11. Then, as shown in Figure 27, the supporting brackets 51, 53 are inserted in the connecting grooves 118a, 118b in the outer circumference of the stator 110, and fastened by the screws. Accordingly, the stator 110 is fastened to the main body 11, and as a result, the housing 21 is pivotably connected to the main body 11. As described above, by completing the assembly of the body 10 with the pivot 30 later using separate supporting brackets 51, 53, removal of the camera unit 20 and the body 10 becomes easier. Accordingly, disassembling and assembling, for such purposes as repair, becomes easier.

The first extension 180b of the signal delivery unit 180 is bent approximately 90° to create a tight contact with the first receiving recess 117b. The signal delivery member 210 is also bent approximately to 90° to create a tight contact with the second receiving recess 117b. Next, the signal cables 220 on which the switches 175, 176 are supported are received in the fourth receiving recess 117d and assembled by some screws. Accordingly, the signal delivery unit 210 in the second receiving recess 117b is brought into tight contact by the signal cable 220 and is thus secured in place. The signal delivery unit 180, the signal delivery member 210, and the signal cables 220 are electrically connected with the main circuit board 16 and other components. Furthermore, by accommodating the signal delivery unit 180, the signal delivery member and the signal cables 210, 220 in the plurality of receiving recesses 117a, 117b, 117d formed in the front face 111a in close contact, the overall volume of the hinge unit 30 can be reduced. This also allows the interval with the main circuit board 26 to be reduced. As a result, the camera can be made of compact size.

After assembling the pivot 30 and the main body 11, the whole assembly process is finally completed as the various components such as moving deck 12, are assembled in the corresponding position of the main body 11 and the sub body 13, respectively.

With the camera using the signal delivery unit according to a preferred embodiment of the present invention, the housing 21 is rotatably connected with the body 10 by use of the pivot 30 which is capable of detecting the rotation of the housing 21 with respect to the body 10. Therefore, according to the relative position of the rotating housing 21, a signal for the selection of DSC mode or DVC mode is transmitted and received between the housing 21 and the body 10. This is enabled by assembling the signal delivery unit 180 having a plurality of signal cables 181, 183, 185 to rotate integrally with the pivot 30.

Furthermore, as the click force providing unit is provided to the pivot 30, the user can feel the 'clicking' during the rotation of the housing 21 at every predetermined angle. Thus, the user can know and decide the range of the housing rotation.

Although the click force providing unit includes the click balls 193 provided to the contact plate 130, and the ring 191 is secured in a predetermined position with respect to the stator 110, this is but one configuration embodiment and should not be considered as limiting. Various other alternatives are possible. For example, and although not shown in the drawings, the position of the click balls 193 and the ring 191 can be swapped. Alternatively, the ring 191 can be omitted and the click holes formed in the front face 110a of the stator 110 to correspond to the click balls 193.

With the signal delivery unit, the hinge apparatus and the camera according to the present invention as described above, the camera system is rotatably installed with respect to the body, while the DSC mode and the DVC mode can be selectively shifted (and determined) according to the rotational position of the camera system.

More specifically, through the use of the sensing unit provided to the hinge apparatus to detect the rotational position of the housing, the mode can be precisely detected. Further, because the signal delivery unit is installed to rotate together with the hinge apparatus within a predetermined angle, not only can the video signals captured by the camera units be transmitted and received between the body and the housing through the lines, but also various other electric signals.

Furthermore, because disassembling and assembling of the hinge apparatus, the housing, and the body become easier, maintenance and repairs are easier to perform, and improve as a result.

Although a few preferred embodiments of the present invention have been described, it will be understood by those skilled in the art that the present invention should not be limited to the described preferred embodiments, but various changes and modifications can be made within the spirit and scope of the present invention as defined by the appended claims.

## Claims

1. A pivot device comprising first and second members (110, 150) mounted on a common shaft (160) for relative rotary motion, **characterised by** position sensing means (C, 171, 175, 176) for generating an electrical signal indicating the relative positions of said members.

2. A device according to claim 1, wherein the position sensing means (C, 171, 175, 176) comprises a cam surface (C) projecting towards the first member (110) from the second member (150) and switch means (175, 176) operated by first and second cam follower means (171a, 171b), carried by the first member (110) and arranged for be selectively displaced by the cam surface (C) according to the relative angular positions of the first and second members (110, 150).

3. A device according to claim 2, wherein the cam follower means (171a, 171b) are located at the same radius with respect to the axis of rotation of the pivot device and are angularly separated by an angular distance greater that the angular extent of the cam surface (C) at said radius.

4. A device according to claim 1, 2 or 3, wherein one of said members (110, 150) has a radial projection (112) and the other of said members (110, 150) has an axial projection (132), said projections being configured to contact each other so as to set the limits of the achievable range of relative angular positions of said members (110, 150).

5. A device according to any preceding claim, including a signal line (180) passing from through the pivot device, wherein an intermediate portion (180a) of the signal line (180) is coiled about the shaft (160) in a space (116, 126) defined within said members (110, 150).

6. A hinge apparatus for rotatably connecting a housing with respect to a main body of an image photographing apparatus providing rotation of the housing in a predetermined rotation range, wherein the hinge apparatus comprises:
a fixing bracket secured to the main body;
a hinge unit secured to the housing, and connected to the fixing bracket to be reciprocatingly rotatable within a predetermined angle;
a shaft member for rotatably connecting the hinge unit and the fixing bracket so that the hinge unit and the fixing bracket can rotate with respect to each other; and
a sensing unit disposed on at least one of the hinge unit and the fixing bracket to sense the relative rotational range of the hinge unit with respect to the fixing bracket.

7. The hinge apparatus for rotatably connecting a housing with respect to a main body of an image photographing apparatus according to claim 6, wherein the fixing bracket comprises:
a body having a first surface;
a first locking protrusion protruding from the first surface of the body for restricting the rotational movement of the hinge unit when the first locking protrusion is rotated with respect to the hinge unit.

8. The hinge apparatus for rotatably connecting a housing with respect to a main body of an image photographing apparatus according to claim 6, wherein the fixing bracket further comprises:
a first rib protruding from the first surface at a radial distance different from that at which the first locking protrusion protrudes; and
a second rib protruding from the first rib, wherein said first and second rib being arranged to couple said fixing bracket to said hinge unit.

9. The hinge apparatus for rotatably connecting a housing with respect to a main body of an image photographing apparatus according to claim 6, wherein the fixing bracket further comprises:
a shaft hole for receiving the shaft member for rotatably connecting the hinge unit and the fixing bracket so that the hinge unit and the fixing bracket can rotate with respect to each other.

10. The hinge apparatus for rotatably connecting a housing with respect to a main body of an image photographing apparatus according to claim 6, wherein the fixing bracket further comprises:
a pair of sensing holes for detection by the sensing unit to enable the sensing unit to sense the relative rotational range of the hinge unit with respect to the fixing bracket.

11. The hinge apparatus for rotatably connecting a housing with respect to a main body of an image photographing apparatus according to claim 10, wherein the pair of sensing holes are formed at predetermined distances from each other, and at a predetermined distance from the first axis.

12. The hinge apparatus for rotatably connecting a housing with respect to a main body of an image photographing apparatus according to claim 7, wherein the first locking protrusion is provided at an outer position of the first surface of the body, and is formed at approximately 45° with respect to a first axis direction through the center of the hinge apparatus.

13. The hinge apparatus for rotatably connecting a housing with respect to a main body of an image photographing apparatus according to claim 6, wherein the hinge unit comprises:
a hinge bracket fixed onto the housing;
a contact plate connected with the hinge bracket; and
a plate spring disposed between the hinge bracket and the contact plate for urging the contact plate toward the fixing bracket.

14. The hinge apparatus for rotatably connecting a housing with respect to a main body of an image photographing apparatus according to claim 13, wherein the hinge bracket comprises:
a body, comprising a first surface, a shaft hole for receiving the shaft member and an annular rib protruding from the first surface.

15. The hinge apparatus for rotatably connecting a housing with respect to a main body of an image photographing apparatus according to claim 14, wherein the annular rib comprises:
a cam surface, with a variable height, provided to an upper end of the annular rib along the circumference of the annular rib, for detecting a movement range of the fixing bracket that rotates.

16. The hinge apparatus for rotatably connecting a housing with respect to a main body of an image photographing apparatus according to claim 15, wherein the cam surface comprises:
an operating surface formed by a first predetermined length at the substantially the same height as the annular rib, wherein the operating surface faces the second rib of the fixing bracket in contact therewith;
a non-contact surface formed on a lower plane than the operating surface with a second predetermined length; and
an inclined surface connecting the operating surface and the non-contact surface.

17. The hinge apparatus for rotatably connecting a housing with respect to a main body of an image photographing apparatus according to claim 6, wherein the sensing unit comprises:
a substantially elastic piece;
a pair of cam pins disposed on both ends of the elastic piece for sensing the relative rotational range of the hinge unit with respect to the fixing bracket; and
a pair of switches provided to the positions corresponding to the cam pins for providing a signal indicating an operating mode of the image photographing apparatus.

18. The hinge apparatus for rotatably connecting a housing with respect to a main body of an image photographing apparatus according to claim 17, wherein the elastic piece includes metal.

19. The hinge apparatus for rotatably connecting a housing with respect to a main body of an image photographing apparatus according to claim 17, wherein the cam pins are positioned to protrude through sensing holes disposed in the fixing bracket.

20. The hinge apparatus for rotatably connecting a housing with respect to a main body of an image photographing apparatus according to claim 6, further comprising:
a click force providing unit disposed between the fixing bracket and the contact plate for providing a predetermined indication at predetermined intervals during the rotation of the housing with respect to the body.

21. The hinge apparatus for rotatably connecting a housing with respect to a main body of an image photographing apparatus according to claim 20, wherein the click force providing unit comprises:
a click plate connected to the fixing bracket; and
at least one click ball arranged between the click plate and the contact plate for providing the predetermined indication.

22. The hinge apparatus for rotatably connecting a housing with respect to a main body of an image photographing apparatus according to claim 21, wherein the click plate further comprises:
a plurality of click balls.

23. The hinge apparatus for rotatably connecting a housing with respect to a main body of an image photographing apparatus according to claim 21, wherein the click plate includes metal.

24. The hinge apparatus for rotatably connecting a housing with respect to a main body of an image photographing apparatus according to claim 21, wherein the click plate further comprises:
a plurality of click holes formed at predetermined angles with respect to the first axis.

25. The hinge apparatus for rotatably connecting a housing with respect to a main body of an image photographing apparatus according to claim 24, wherein the predetermined angles are arranged in intervals of approximately 45°.

26. The hinge apparatus for rotatably connecting a housing with respect to a main body of an image photographing apparatus according to claim 16, wherein the click plate further comprises:
a guide groove for guiding the click balls to roll between the click holes.

27. The hinge apparatus for rotatably connecting a housing with respect to a main body of an image photographing apparatus according to claim 6, further comprising:
a pair of sensor holes disposed within the fixing bracket;
a cam surface comprising an operating surface, a non-contact surface and an inclined surface , the cam surface located on the hinge unit; and
an elastic piece comprising a pair of cam pins disposed to protrude through the pair of sensor holes, and a pair of switches disposed to contact the pair of cam pins;
wherein as the cam pins protrude through the sensing holes, the cam pins are pushed backwards by contact with the operating surface to contact one of the pair of switches due to the operating surface being formed of a third predetermined length in consideration of the interval between the cam pins such that only one of the cam pins can be contacted by the operating surface, and an operating mode of the image photographing apparatus is determined by which cam pin contacts the operating surface and is pushed back to contact one of the pair of switches.

28. The hinge apparatus for rotatably connecting a housing with respect to a main body of an image photographing apparatus according to claim 6, wherein:
the image photographing apparatus comprises a first camera unit and a second camera unit; and
the fixing bracket, the hinge unit, and the shaft member for allowing rotational movement between the first and second camera unit.

29. The hinge apparatus for rotatably connecting a housing with respect to a main body of an image photographing apparatus according to claim 28, wherein the first camera unit is a digital still camera, and the second camera unit is a digital video camera.

30. The hinge apparatus for rotatably connecting a housing with respect to a main body of an image photographing apparatus according to claim 28, wherein the sensing unit determines one of a first operating mode that indicates a digital still camera mode, and a second operating mode that indicates a digital video camera mode.
